# EUROPÄISCHE PATENTSCHRIFT

(11) **EP 2 246 952 B1**
(45) Veröffentlichungstag und Bekanntmachung des Hinweises auf die Patenterteilung: **28.06.2017**
(21) Anmeldenummer: 10003920.5
(22) Anmeldetag: 14.04.2010
(51) Int. Cl.: H02G 7/05, H02G 7/20

(54) **Haltevorrichtung für eine Freileitung und Freileitungsanordnung**
Holding device for an open wire and open wire assembly
Dispositif de retenue pour une ligne aérienne et agencement de ligne aérienne

(30) Priorität: 30.04.2009 DE 102009019639
(43) Veröffentlichungstag der Anmeldung: 03.11.2010
(73) Patentinhaber: Lapp Insulators GmbH, 95632 Wunsiedel (DE)
(72) Erfinder: Frenkel, Viktor, 125080 Moscow (RU)
(74) Vertreter: FDST Patentanwälte

(56) Entgegenhaltungen:
- AT-B- 127 271
- GB-A- 968 249

## Beschreibung

Die Erfindung betrifft eine Haltevorrichtung für eine Freileitung. Des Weiteren betrifft die Erfindung eine Freileitungsanordnung mit einer derartigen Haltevorrichtung. Die Erfindung beschäftigt sich dabei mit dem Problem des Nachrüstens bereits bestehender, zum Transport von niedrigen Nennspannungen konzipierter Freileitungssysteme zur Verwendung in einem Bereich hoher Nennspannung.

Für die Übertragung und Verteilung elektrischer Energie außerhalb von Städten werden bekanntermaßen Freileitungssysteme verwendet. Über diese werden Industrie und Privathaushalte zum Teil über weite Strecken mit Energie versorgt. Beim Endverbraucher wird die Spannung auf eine Gebrauchsspannung zur Nutzung im Alltag transformiert.

Von Vorteil bei der Verwendung von Freileitungssystemen ist insbesondere auch die gute Zugänglichkeit für Reparaturen und die dadurch erreichbaren kurzen Wiederversorgungszeiten nach einer Störung.

Freileitungssysteme können grundsätzlich für unterschiedlich hohe Spannungen ausgelegt sein. Abhängig von der geführten Spannung müssen bei Freileitungssystemen strenge, normierte Sicherheitskriterien eingehalten werden. Insbesondere muss zwischen dem die Spannung führenden Leiterseil und dem Boden ein vorgegebener Sicherheitsabstand eingehalten werden, damit es beim Durchfahren mit üblichen Gerätschaften nicht zu einem Überschlag kommen kann.

Der Sicherheitsabstand für ein Spannung führendes Teil ist für hohe Nennspannungen größer als für eine vorhandene niedrige Nennspannung. Bei einer Umrüstung der Energieversorgung von einer niedrigen auf eine hohe Nennspannung können insofern bestehende Mastsysteme nicht mehr eingesetzt werden, da deren Höhe den Sicherheitsabstand für das Leiterseil nicht mehr gewährleistet. Älte re bestehende Freileitungssysteme für niedrige Nennspannungen, insbesondere die jeweiligen Masten, müssen insofern bei einer Umrüstung kostenintensiv ausgetauscht werden, da sich die Sicherheitsbestimmungen zur Führung höherer Spannungen nicht erfüllen lassen.

In der AT 127 271 B ist eine Haltevorrichtung gezeigt, die einen als Blattfeder ausgebildeten Stützrahmen mit zwei Halteelementen zur Aufnahme eines Leiterseils aufweist. Der Stützrahmen weist zwei Schenkel auf, zwischen denen sich ein Halteisolator erstreckt. Der Halteisolator kann an einem Mast befestigt werden.

In der GB 968,249 A ist ein Bügel mit einem Stützrahmen gezeigt, der zum Halten einer Mehrzahl von Freileitungen ausgebildet ist. Der Rahmen weist Arme auf, an denen Haltelemente angebracht sind, in denen die Leiterseile in einem durch die Arme festgesetzten Abstand voneinander gehalten sind. Der Rahmen ist an einem Isolator befestigt, der an einem Masten befestigt sein kann.

Die JP 48 044 798 B zeigt eine Haltevorrichtung, wobei ein Leiterseil ohne einen Stützrahmen über Halteisolatoren an einem Masten befestigt ist. Die Halteisolatoren sind hier über ein Gelenk beweglich an dem Mast befestigt. Das Leiterseil ist in einem Haltelement geführt.

Es ist Aufgabe der Erfindung, eine Haltevorrichtung für eine Freileitung anzugeben, die ein Umrüsten von für niedrige Nennspannung konzipierten Freileitungssystemen auf eine höhere Spannung möglich macht.

Eine weitere Aufgabe der Erfindung ist es, eine Freileitungsanordnung anzugeben, die eine solche Haltevorrichtung umfasst.

Die erstgenannte Aufgabe der Erfindung wird erfindungsgemäß gelöst durch eine Haltevorrichtung mit der Merkmalskombination gemäß Anspruch 1.

Demnach weist die Haltevorrichtung für eine Freileitung mit einem Leiterseil einen Stützrahmen mit mindestens zwei Tragschenkeln auf, an deren Ende jeweils ein Halteelement zur Aufnahme eines Leiterseils angeordnet ist, und einen sich in einer Längsrichtung erstreckenden Halteisolator, der zwischen den Tragschenkeln des Stützrahmens angebracht ist und der ein freies Ende zur Befestigung an einer Mast-Traverse aufweist, wobei der Stützrahmen derart dimensioniert ist, dass die Tragschenkel sich in der Längsrichtung des Halteisolators über das freie Ende des Halteisolators hinaus erstrecken, um das Leiterseil in vertikaler Richtung oberhalb des Halteisolators anzuheben.

In einem ersten Schritt geht die Erfindung von der Tatsache aus, dass Masten für niedrige Nennspannungen an sich aufgrund einer zu geringen Höhe nicht zum Führen von Leiterseilen genutzt werden können, die höhere Spannungen führen.

Sicherheitsrichtlinien bestimmen den einzuhaltenden Mindestabstand des geführten Leiterseils zum Boden. Da die Höhe der Masten für niedrige Nennspannungen grundsätzlich durch den Abstand der Leiterseile zum Boden definiert ist, ist eine Verwendung der für niedrige Spannungen konzipierten Masten für hohe Nennspannungen nach derzeitigem Wissensstand nicht möglich.

In einem zweiten Schritt geht die Erfindung von der Überlegung aus, dass eine Mast-Traverse zum Führen eines Leiterseils mit niedriger Nennspannung grundsätzlich jedoch hoch genug angeordnet ist, um dort eine hohe Nennspannung führen zu können. Der einzuhaltende Sicherheitsabstand ist nämlich nicht durch die Höhe der Mast-Traverse als solcher, sondern durch den tiefsten Punkt des zwischen zwei Traversen benachbarter Masten befestigten, durchhängenden Leiterseils bestimmt. In dem sich unterhalb der Mast-Traverse befindlichen Bereich ist insbesondere ein verfügbarer Bauraum vorhanden, in dessen Abmessungen der geforderte Sicherheitsabstand zum Boden noch eingehalten wird. Bislang wurde diesem Bauraum von der Fachwelt allerdings keine Bedeutung beigemessen.

In einem dritten Schritt nutzt die Erfindung diese Erkenntnis aus, eine Haltevorrichtung zum Erhöhen des geführten Leiterseils zu konzipieren, die unter Ausnutzung des unteren Bauraums an der Mast-Traverse angebracht werden kann. Hierzu weist die Haltevorrichtung einen Stützrahmen auf, der im Bauraum unterhalb der Mast-Traverse angebracht ist, wobei sich oberhalb der Mast-Traverse in Längsrichtung erstreckende Tragschenkel das Leiterseil anheben. Hierdurch wird sowohl am Mast als auch am tiefsten Punkt des durchhängenden Leiterseils der Sicherheitsabstand zum Boden eingehalten, so dass es zum Führen von hohen Nennspannungen genutzt werden kann.

Überraschenderweise ermöglicht es eine erfindungsgemäße Haltevorrichtung somit, Masten für niedrige Nennspannung zum Führen von auf hohen Nennspannungen befindlichen Leiterseilen zugänglich zu machen. Bereits bestehende Masten müssen nicht kostenintensiv und mit hohem logistischem Aufwand durch neue ersetzt werden.

Durch die Nutzung des neu erkannten unteren Bauraums gelingt es, eine mechanisch stabile Konstruktion zum Anheben des Leiterseils zu schaffen.

Die Haltevorrichtung für eine Freileitung umfasst einen Stützrahmen und einen Halteisolator.

Der Stützrahmen der Haltevorrichtung kann beispielsweise zwei Tragschenkel aufweisen, an deren Ende Halteelemente zur Führung des Leiterseils angebracht sind. Der Stützrahmen kann über den Halteisolator zum Beispiel durch die Verwendung von Befestigungsmitteln wie Schrauben oder Bolzen an einer Mast-Traverse hängend befestigt sein. Selbstverständlich können auch mehrere Tragschenkel vorgesehen sein.

Dadurch, dass der Stützrahmen derart dimensioniert ist, dass sich die Tragschenkel in Längsrichtung über das freie Ende des Halteisolators hinaus erstrecken, werden die an den Enden der Tragschenkel befestigten Halteelemente zur Führung des Leiterseils im Einbauzustand höher positioniert, als die Mast-Traverse, wodurch sich der Abstand des geführten Leiterseils zum Boden gegenüber der bisherigen direkten Befestigung vergrößert. Mit zunehmender Länge der sich über das freie Ende des Halteisolators hinaus erstreckenden Tragschenkel vergrößert sich dieser Abstand, so dass es möglich ist, über die Größe des Stützrahmens die Höhe des geführten Leiterseils zu variieren.

Weiterhin kann die Größe des Stützrahmens bzw. der Haltevorrichtung in ihren Abmessungen dem zur Verfügung stehenden Bauraum angepasst werden. Dadurch kann der Stützrahmen vielfältig für verschiedene Freileitungsanordnungen mit Masten unterschiedlicher Höhe angewendet werden.

Der zwischen den Tragschenkeln des Stützrahmens angebrachte Halteisolator dient neben seiner Funktion als Isolator zur Befestigung des Stützrahmens an der Mast-Traverse und gibt dem Stützrahmen so in Längsrichtung Stabilität. Der Halteisolator kann beispielsweise als ein Hängeisolator, als ein Tragisolator oder als ein Abspannisolator ausgebildet sein. Insbesondere für sehr hohe statische Anforderungen und hohe Nennspannungen können auch parallele Langstabisolatoren oder Isolatorenketten verwendet werden. Der Halteisolator kann bereits vor der Befestigung der Haltevorrichtung an der Mast-Traverse befestigt sein und wird insbesondere auf Zug beansprucht.

Zur Befestigung an der Mast-Traverse ist das freie Ende des Halteisolators vorgesehen. Hierzu können verschiedene Befestigungsmittel dienen. Beispielsweise kann das Befestigungsmittel für eine Bolzen- oder für eine Schraubverbindung ausgebildet sein. Die Haltelemente der Tragschenkel können unterschiedlich in ihrer Form und Größe sein. Beispielweise können sie u-förmig oder rechteckig, offen oder geschlossen sein, das Leiterseil umgreifen und dieses form- oder kraftschlüssig führen.

Insgesamt bietet die Erfindung durch die Verwendung der angegebenen Haltevorrichtung für Freileitungen eine völlig neue, kostengünstige, variable und einfach zu handhabende Möglichkeit, um bestehende Freileitungssysteme unter Beibehalt der bisherigen Masten hinsichtlich ihrer Verwendung für hohe Nennspannungen nachzurüsten.

Die Tragschenkel des Stützrahmens können sich grundsätzlich in verschiedene Richtungen erstrecken. Insbesondere können die Tragschenkel auch unter einem Winkel zueinander verlaufen. In einer vorteilhaften Ausgestaltung der Erfindung sind sie in Längsrichtung parallel zueinander ausgerichtet. Hierdurch werden die auf den Stützrahmen wirkenden Kräfte bei kleiner Bauform gleichmäßig verteilt, wodurch die Stabilität der Haltevorrichtung erhöht wird.

Im Allgemeinen kann der Stützrahmen verschiedene Formen haben. Vorteilhafterweise ist der Stützrahmen im Wesentlichen in einer U-Form ausgebildet. Dadurch wird, ebenso wie durch die Parallelität der Tragschenkel, die Stabilität und die mechanische Festigkeit des Stützrahmens erhöht. Insbesondere ermöglicht dies eine einfache und kostengünstige Herstellung sowie eine leichte Befestigung des Halteisolators.

Bevorzugt ist zwischen den Tragschenkeln ein Quersteg angebracht, an dem der Halteisolator befestigt ist, wobei die Tragschenkel spiegelsymmetrisch bezüglich des Halteisolators ausgebildet sind. Der Quersteg bietet einen sicheren Befestigungspunkt für den zwischen den Tragschenkeln angebrachten Halteisolator.

Durch die spiegelsymmetrische Anordnung der Tragschenkel bezüglich des Halteisolators ist weiterhin gewährleistet, dass die auf den Stützrahmen wirkenden Kräfte gleichmäßig auf die Tragschenkel verteilt und vom Halteisolator ohne Scherkräfte aufgenommen werden.

In einer weiteren vorteilhaften Ausgestaltung der Erfindung ist der Stützrahmen aus einem Metall gefertigt. Die Verwendung eines Metalls oder einer Metall-Legierung bietet die Möglichkeit, einen stabilen Stützrahmen herzustellen, der korrosionsbeständig ist und eine entsprechende Stabilität aufweist, so dass er sich durch die auf ihn einwirkenden Kräfte nicht verformt. Zusätzlich sind viele leicht zu handhabende Herstellungsverfahren für Metallteile bekannt, wodurch die Produktionskosten gering gehalten werden können.

Um die Sicherheit der Haltevorrichtung zu erhöhen und um zu verhindern, dass ein Funkenüberschlag entsteht, ist der Abstand zwischen dem freien Ende des Halteisolators und dem Stützrahmen zweckmäßigerweise zur Verhinderung eines Spannungsüberschlages in Luft ausreichend dimensioniert. Der einzuhaltende Mindestabstand kann in Abhängigkeit der anliegenden Spannung für eine Überschlagsstrecke in Luft berechnet und der Stützrahmen den Anforderungen entsprechend hergestellt und angebracht werden. Dabei kann der Stützrahmen kleinstmöglich bis an den niedrigsten Mindestabstand heran dimensioniert werden, wodurch sich die mechanische Festigkeit erhöht.

Grundsätzlich können Isolatoren entweder stehend oder hängend ausgebildet sein. Stehende Isolatoren ermöglichen geringere Masthöhen und bieten aufgrund der Konstruktion einer Freileitungsanordnung eine gewisse Sicherheit vor dem Herabfallen des Leiterseils. Hängende Isolatoren können größeren Querkräften durch seitliche Auslenkung ausweichen, so dass sie keine Biegebeanspruchung erfahren. Insgesamt können beide Arten von Isolatoren mit Rippen zur Verlängerung des Kriechweges ausgestattet sein. Es sind sowohl Keramik- als auch Verbundisolatoren für die abgegebene Haltevorrichtung einsetzbar.

In einer besonders vorteilhaften Ausführung der Erfindung ist der Halteisolator zur Isolierung einer Potenzialdifferenz von wenigstens 30 kV ausgebildet. Bereits bestehende Freileitungssysteme für niedrige Nennspannungen sind beispielsweise für Spannungen im Bereich zwischen 5 und 30 kV konzipiert. Neue Leitungen für hohe Nennspannungen hingegen decken einen Spannungsbereich darüber hinaus und insbesondere zwischen 70 und 130 kV ab. Aus diesem Grund ist der Halteisolator für entsprechende Potentialdifferenzen auszubilden.

Für Spannungen oberhalb von 30 kV werden zumeist Langstabisolatoren verwendet, oberhalb von 200 kV außerdem häufig Kettenisolatoren. Als Isolator-Material wird meist Glas oder Keramik verwendet, insbesondere ist auch die Verwendung von Isolatoren aus hochfestem Kunststoff möglich.

Vorteilhafterweise ist der Halteisolator als eine Isolatorenkette mit einer Anzahl von hintereinander geschalteten Einzelisolatoren ausgebildet. Jeder Einzelisolator ist für eine gewisse Potentialdifferenz ausgebildet. Durch ein Hintereinanderschalten einzelner Isolatoren kann insgesamt kostengünstig eine größere Potentialdifferenz überbrückt werden, als dies mit einem Einzelisolator möglich ist. Zusätzlich bietet die Verwendung von Isolatorenketten eine gewisse Flexibilität, da die die Anzahl der eingesetzten Isolatoren der zu isolierenden Potentialdifferenz angepasst werden kann.

Die zweitgenannte Aufgabe wird erfindungsgemäß durch eine Freileitungsanordnung mit der Merkmalskombination gemäß Anspruch 8 gelöst.

Demnach umfasst die Erfindung eine Freileitungsanordnung, umfassend eine Haltevorrichtung mit einem Stützrahmen mit mindestens zwei Tragschenkeln, an deren Enden jeweils ein Halteelement zur Aufnahme eines Leiterseils angeordnet ist, und mit einem sich in einer Längsrichtung erstreckenden Halteisolator, der zwischen den Tragschenkeln des Stützrahmens angebracht ist und der ein freies Ende zur Befestigung an einer Mast-Traverse aufweist, wobei der Stützrahmen derart dimensioniert ist, dass sich die Tragschenkel in Längsrichtung des Halteisolators über das freie Ende des Halteisolators hinaus erstrecken, einen Masten, an dem eine Mast-Traverse befestigt ist, wobei der Halteisolator mit seinem freien Ende mit der Mast-Traverse verbunden ist, und einen Stabilisierungsisolator, der die Haltevorrichtung im Wesentlichen senkrecht zur Längsrichtung des Halteisolators gegen den Masten abstützt, wobei die Tragschenkel das Leiterseil in vertikaler Richtung oberhalb des Halteisolators anheben.

Weitere vorteilhafte Ausgestaltungen finden sich in den auf die Freileitungsanordnung gerichteten Unteransprüchen. Dabei können die für die Vorrichtung genannten Vorteile sinngemäß auf die Anordnung übertragen werden.

Ist ein Leiterseil in den Halteelementen der Tragschenkel über die Mast-Traverse geführt, stützt sich die Haltevorrichtung vorteilhaft über das Leiterseil mittels eines Stabilisierungsisolators an dem Mast ab. Die Haltevorrichtung braucht keine weitere Befestigung zu umfassen. Zur Befestigung des Stabilisierungsisolators kann auf bekannte Vorrichtungen zur Anbringung des Leiterseils zurückgegriffen werden.

Durch die Verwendung eines Stabilisierungsisolators wird die Stabilität der Haltevorrichtung gewährleistet. Durch die Befestigung mittels der beiden Isolatoren, von denen der Stabilisierungsisolator auf Druck oder Zug ausgelegt ist, und der Halteisolator auf Zug belastet wird, werden die auf den Stützrahmen wirkenden Zug- und Druckkräfte gleichmäßig verteilt. Dadurch wird der Stützrahmen in seiner Position gehalten.

Durch die Verwendung von zwei Isolatoren - Halteisolator und Stabilisierungsisolator - in der Freileitungsanordnung wird eine in sich stabile Konstruktion gewährleistet, die äußeren Beanspruchungen, wie beispielsweise schwankenden Wetterbedingungen, Stürme oder dergleichen, standhalten kann.

Der Stabilisierungsisolator ist bevorzugt im Wesentlichen rechtwinklig zum Halteisolator angeordnet. Der Winkel ist im Einzelfall auf die wirkenden Kräfte anzupassen. Der Stabilisierungsisolator verhindert insbesondere Kippbewegungen der Haltevorrichtung quer zum Leiterseil.

Grundsätzlich kann das Leiterseil durch einen Stabilisierungsisolator auch außerhalb des Stützrahmens geführt werden. Bevorzugt ist das Leiterseil jedoch zwischen den Haltelementen der Tragschenkel durch den Stabilisierungsisolator gestützt. Dadurch kann eine gleichmäßige und symmetrische Führung des Leiterseils bei zugleich kompakter Bauform gewährleistet werden.

Zweckmäßigerweise weisen das Leiterseil und die Tragschenkel einen im Wesentlichen gleichen Minimalabstand gegenüber dem freien Ende des Halteisolators auf. Durch die Einhaltung des Minimalabstands kann eine eventuelle Funkenbildung und ein Spannungsüberschlag verhindert werden. Durch die Tatsache, dass der Abstand der Tragschenkel zum freien Ende des Halteisolators gleich groß ist, werden die Kräfte, die auf den Stützrahmen wirken, gleichermaßen auf beide Tragschenkel verteilt und die Stabilität des Stützrahmens vergrößert.

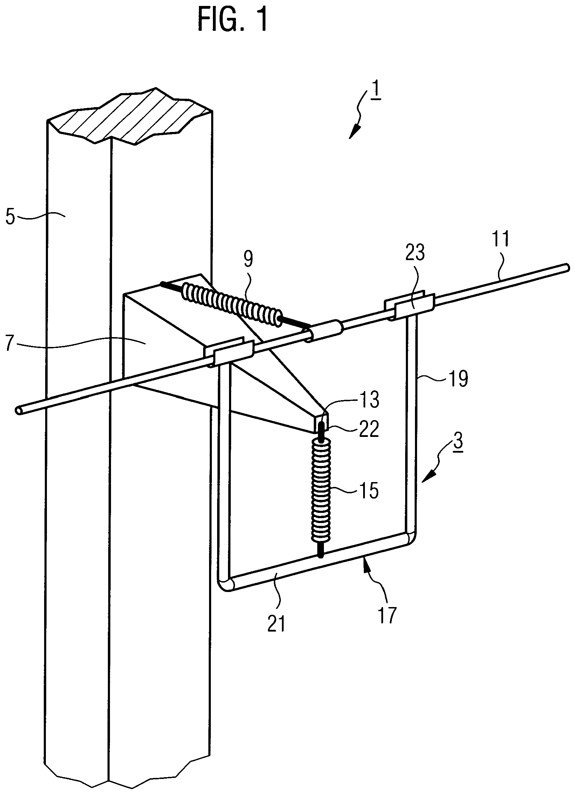

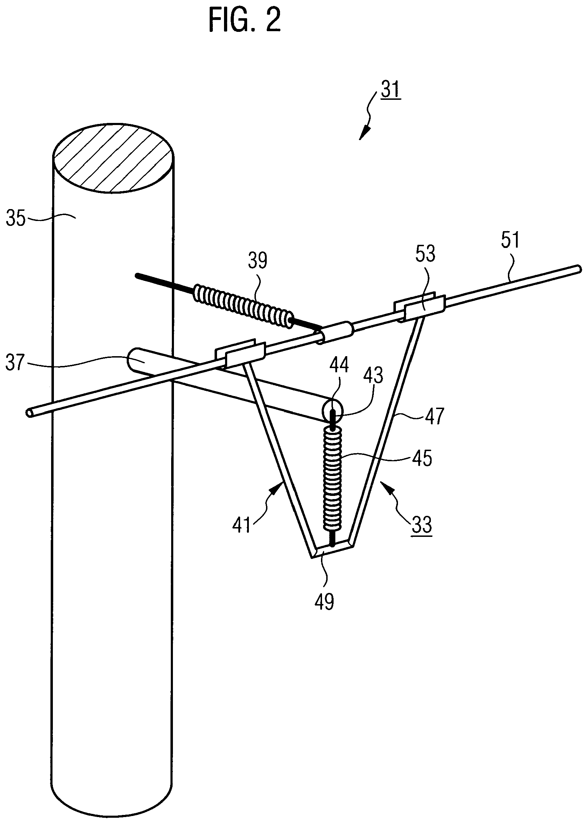

Im Folgenden werden zwei Ausführungsbeispiele der Erfindung anhand der Zeichnungen näher erläutert. Dabei zeigen Fig. 1 und Fig. 2 jeweils eine Freileitungsanordnung mit einer Haltevorrichtung, wobei sich die einzelnen Elemente der Freileitungsanordnung in ihrer Geometrie unterscheiden.

In Fig. 1 ist eine Freileitungsanordnung 1 mit einer Haltevorrichtung 3 gezeigt. Die Freileitungsanordnung 1 umfasst einen Mast 5 und eine rechtwinklig an dem Mast 5 befestigte Mast-Traverse 7. Der aus einem Metall bestehende Mast 5 hat einen rechteckigen Querschnitt. Die ebenfalls metallische Mast-Traverse 7 hat einen sich in Querrichtung zu ihrem äußeren Ende hin verjüngenden Querschnitt.

Die Haltevorrichtung 3 umfasst neben dem Halteisolator 15 weiterhin einen in U-Form ausgebildeten Stützrahmen 17, der vorliegend aus einem Metall gefertigt ist. Der Stützrahmen 17 besteht aus drei rechtwinklig zueinander angeordneten Streben, nämlich zwei Tragschenkel 19 und einen zwischen diesen Tragschenkeln 19 angeordneten Quersteg 21. Die Ecken des Stützrahmens 17 sind abgerundet ausgeführt. Er ist parallel zum Mast 5 angeordnet und in der Mitte seines Quersteges 21 mit dem Halteisolator 15 verbunden.

An dem äußeren Ende der Mast-Traverse 7 ist diese mit dem freien Ende 13 eines keramischen Halteisolators 15 der Haltevorrichtung 3 verbunden. Ein Befestigungsmittel 22 dient für eine Bolzenverbindung.

An dem Kontaktpunkt des Mastes 5 und der Mast-Traverse 7 ist ein keramischer Stabilisierungsisolator 9 befestigt. Das freie Ende des Stabilisierungsisolators 9 stützt ein Leiterseil 11.

Die Tragschenkel 19 weisen an ihren sich in Längsrichtung über das freie Ende des Halteisolators 15 hinaus erstreckenden Enden jeweils ein vorliegend U-förmig ausgebildetes Halteelement 23 auf. Zusätzlich ist das Leiterseil 11 durch den Stabilisierungsisolator 9 zwischen diesen Halteelementen 23 der Tragschenkel 19 abgestützt. Hierdurch stützt sich die Haltevorrichtung 3 insgesamt am Stabilisierungsisolator 9 quer zur Seilrichtung ab.

Die Tragschenkel 19 sind parallel zueinander ausgebildet. Sowohl die Tragschenkel 19 als auch das Leiterseil 11, bzw. das äußere Ende des Stabilisierungsisolators 9 weisen einen gleichen Minimalabstand zum freien Ende 13 des Halteisolators 15 und der Mast-Traverse 7 auf. Der Minimalanstand gewährleistet eine Verhinderung eines Funkenüberschlags in Luft. Weiterhin sind die Tragschenkel 19 spiegelsymmetrisch bezüglich des Halteisolators 15 angeordnet.

Der vorgeschriebene Mindestabstand oder Sicherheitsabstand zwischen der Haltevorrichtung 5 zum in der Zeichnung nicht explizit gezeigten Boden ist durch die Verwendung der Haltevorrichtung 3 auch für ein hohe Nennspannungen führendes Leiterseil 11 gewährleistet. Durch die Anhebung des Leiterseils 11 über die Mast-Traverse 7 wird der Sicherheitsabstand zum Boden am tiefsten Punkt des durchhängenden Leiterseils 11 zwischen zwei benachbarten Masten 5 eingehalten.

Durch eine Änderung der Abmessungen des Stützrahmens 17 bzw. durch eine Verlängerung der Tragschenkel 19 kann eine zusätzliche Erhöhung des Leiterseils 11 erreicht werden.

Fig. 2 zeigt ebenfalls eine Freileitungsanordnung 31. Die Freileitungsanordnung 31 umfasst wie auch in Fig. 1 einen Mast 35 und eine in etwa rechtwinklig an diesem Mast 35 befestigte Mast-Traverse 37.

Im Unterschied zu Fig. 1 sind in Fig. 2 sowohl der Mast 35 als auch die an dem Mast 35 befestigte Mast-Traverse 37 zylindrisch ausgebildet. Der als Verbundisolator ausgebildete Stabilisierungsisolator 39 ist in Fig. 2 direkt am Mast 35 befestigt und parallel zur Mast-Traverse 37 angeordnet. Am äußeren Ende der Mast-Traverse 37 ist der Stützrahmen 41 über ein für eine Schraubverbindung ausgebildetes Befestigungsmittel 44 des Halteisolators 45 angebunden. Der Halteisolator 45 ist ebenfalls als ein Verbundisolator gefertigt.

Der Stützrahmen 41 umfasst wiederum drei Streben, nämlich zwei Tragschenkel 47 und einen zwischen diesen Tragschenkeln 47 angeordneten Quersteg 49. Die Tragschenkel 47 sind nicht parallel zueinander angeordnet, sondern verlaufen in Längsrichtung entgegengesetzt unter einem Winkel auseinander. Weiterhin sind die Tragschenkel 47 auch hier spiegelsymmetrisch bezüglich des Halteisolators 45 angeordnet. Das Leiterseil 51 ist durch den als Verbundisolator ausgebildeten Stabilisierungsisolator 39 zwischen den an den Enden der Tragschenkel 47 befestigten Halteelemente 53 abgestützt. Sowohl die Tragschenkel 47 als auch das Leiterseil 51 weisen in Fig. 2 einen genügend großen Abstand zum freien Ende des Halteisolators 45 und der Mast-Traverse 37 auf.

## Patentansprüche

1. Haltevorrichtung (3, 33) für eine Freileitung, umfassend einen Stützrahmen (17, 41) mit mindestens zwei Tragschenkeln (19, 47), an deren Enden jeweils ein Haltelement (23, 53) zur Aufnahme eines Leiterseils (11, 51) angeordnet ist, und einen sich in einer Längsrichtung erstreckenden Halteisolator (15, 45), der zwischen den Tragschenkeln (19, 47) des Stützrahmens (17, 41) angebracht ist und der ein freies Ende (13, 43) zur Befestigung an einer Mast-Traverse (7, 37) aufweist, **dadurch gekennzeichnet, dass** der Stützrahmen (17, 41) derart dimensioniert ist, dass sich die Tragschenkel (19, 47) in Längsrichtung des Halteisolators (15, 45) über das freie Ende des Halteisolators (15, 45) hinaus erstrecken, um das Leiterseil (11, 51) in vertikaler Richtung oberhalb des Halteisolators (15, 45) anzuheben.

2. Haltevorrichtung (3, 33) nach Anspruch 1,
wobei die Tragschenkel (19, 47) in Längsrichtung parallel zueinander ausgerichtet sind.

3. Haltevorrichtung (3, 33) nach Anspruch 1 oder 2,
wobei der Stützrahmen (17, 41) im Wesentlichen in einer U-Form ausgebildet ist.

4. Haltevorrichtung (3, 33) nach einem der vorhergehenden Ansprüche,
wobei zwischen den Tragschenkeln (19, 47) ein Quersteg (21, 49) angebracht ist, an dem der Halteisolator (15, 45) befestigt ist, und wobei die Tragschenkel (19, 47) spiegelsymmetrisch bezüglich des Halteisolators (15, 45) ausgebildet sind.

5. Haltevorrichtung (3, 33) nach einem der vorhergehenden Ansprüche,
wobei der Stützrahmen (17, 41) aus einem Metall gefertigt ist.

6. Haltevorrichtung (3, 33) nach einem der vorhergehenden Ansprüche,
wobei der Abstand zwischen dem freien Ende (13, 43) des Halteisolators (15, 45) und dem Stützrahmen (17, 41) zur Verhinderung eines Spannungsüberschlags in Luft ausreichend dimensioniert ist.

7. Haltevorrichtung (3, 33) nach einem der vorhergehenden Ansprüche,
wobei der Halteisolator (15, 45) zur Isolierung einer Potentialdifferenz von wenigstens 30 kV ausgebildet ist.

8. Haltevorrichtung (3,33) nach einem der vorhergehenden Ansprüche,
wobei der Halteisolator (15, 45) als eine Isolatorenkette mit einer Anzahl von hintereinander geschalteten Einzelisolatoren ausgebildet ist

9. Freileitungsanordnung (1, 31), umfassend eine Haltevorrichtung (3, 33) nach Anspruch 1, einen Masten (5, 35), an dem eine Mast-Traverse (7, 37) befestigt ist, wobei der Halteisolator (15, 45) mit seinem freien Ende (13, 43) mit der Mast-Traverse (7, 37) verbunden ist, und einen Stabilisierungsisolator (9, 39), der die Haltevorrichtung (3, 33) im Wesentlichen senkrecht zur Längsrichtung des Halteisolators (15, 45) gegen den Masten (5, 35) abstützt, und wobei die Tragschenkel (19, 47) das Leiterseil (11, 51) in vertikaler Richtung oberhalb des Halteisolators (15, 45) anheben.

10. Freileitungsanordnung (1, 31) nach Anspruch 9,
wobei ein Leiterseil (11, 51) in den Halteelementen (23, 53) der Tragschenkel (19, 47) über die Mast-Traverse (7, 37) geführt ist, und wobei sich die Haltevorrichtung (3, 33) über das Leiterseil (11, 51) mittels des Stabilisierungsisolators (9, 39) an dem Mast (5, 35) abstützt.

11. Freileitungsanordnung (1, 31) nach einem der Ansprüche 9 oder 10, wobei das Leiterseil (11, 51) zwischen den Halteelementen (23, 53) der Tragschenkel (19, 47) durch den Stabilisierungsisolator (9, 39) gestützt ist.

12. Freileitungsanordnung (1, 31) nach einem der Ansprüche 9 bis 11,
wobei zwischen der Haltevorrichtung (3, 33) und dem Boden ein vorgegebener Mindestabstand eingehalten ist.

13. Freileitungsanordnung (1, 31) nach einem der Ansprüche 9 bis 12,
wobei die Tragschenkel (19, 47) in Längsrichtung parallel zueinander ausgerichtet sind.

14. Freileitungsanordnung (1, 31) nach einem der Ansprüche 10 bis 13,
wobei das Leiterseil (11, 51) und die Tragschenkel (19, 47) einen im Wesentlichen gleichen Minimalabstand gegenüber dem freien Ende (13, 43) des Halteisolators (15, 45) aufweisen.

15. Freileitungsanordnung (1, 31) nach einem der Ansprüche 9 bis 14,
wobei der Stützrahmen (17, 41) im Wesentlichen in einer U-Form ausgebildet ist.

16. Freileitungsanordnung (1, 31) nach einem der Ansprüche 9 bis 15,
wobei zwischen den Tragschenkeln (19, 47) ein Quersteg (21, 49) ausgebildet ist, an dem der Halteisolator (15, 45) befestigt ist, und wobei die Tragschenkel (19, 47) spiegelsymmetrisch bezüglich des Halteisolators (15, 45) ausgebildet sind.

17. Freileitungsanordnung (1, 31) nach einem der Ansprüche 9 bis 16,
wobei der Abstand zwischen dem freien Ende (13, 43) des Halteisolators (15, 45) und dem Stützrahmen (17, 41) zur Verhinderung eines Spannungsüberschlags in Luft ausreichend dimensioniert ist.

18. Freileitungsanordnung (1, 31) nach einem der Ansprüche 9 bis 17,
wobei der Halteisolator (15, 45) und/oder der Stabilisierungsisolator (9, 39) zur Isolierung einer Potentialdifferenz von wenigstens 30 kV ausgebildet sind.

## Claims

1. Holding device (3, 33) for an overhead line, comprising a supporting frame (17, 41) having at least two carrying legs (19, 47), a holding element (23, 53) being arranged on each of the ends thereof for receiving a conductor cable (11, 51), and a holding insulator (15, 45) that extends in a longitudinal direction and is mounted between the carrying legs (19, 47) of the supporting frame (17, 41) and that has a free end (13, 43) for fixing to a mast crossbeam (7, 37), **characterised in that** the supporting frame (17, 41) is sized in such a way that the carrying legs (19, 47) extend in the longitudinal direction of the holding insulator (15, 45) beyond the free end of the holding insulator (15, 45) in order to raise the conductor cable (11, 51) in the vertical direction above the holding insulator (15, 45).

2. Holding device (3, 33) according to claim 1,
wherein the carrying legs (19, 47) are aligned parallel to each other in the longitudinal direction.

3. Holding device (3, 33) according to claim 1 or 2,
wherein the supporting frame (17, 41) is formed substantially in a U-shape.

4. Holding device (3, 33) according to one of the preceding claims,
wherein a transverse bar (21, 49) is mounted between the carrying legs (19, 47), the holding insulator (15, 45) being fixed to said transverse bar (21, 49), and wherein the carrying legs (19, 47) are formed to be mirror-symmetrical with respect to the holding insulator (15, 45).

5. Holding device (3, 33) according to one of the preceding claims,
wherein the supporting frame (17, 41) is made of a metal.

6. Holding device (3, 33) according to one of the preceding claims,
wherein the distance between the free end (13, 43) of the holding insulator (15, 45) and the supporting frame (17, 41) is adequately sized to prevent a voltage flashover in air.

7. Holding device (3, 33) according to one of the preceding claims,
wherein the holding insulator (15, 45) is formed to insulate a potential difference of at least 30 kV.

8. Holding device (3, 33) according to one of the preceding claims,
wherein the holding insulator (15, 45) is formed as an insulator chain having a number of individual insulators connected one after the other.

9. Overhead line arrangement (1, 31), comprising a holding device (3, 33) according to claim 1, a mast (5, 35) to which a mast crossbeam (7, 37) is fixed, wherein the holding insulator (15, 45) is connected to the mast crossbeam (7, 37) by its free end (13, 43), and a stabilising insulator (9, 39) that supports the holding device (3, 33) against the mast (5, 35) substantially perpendicular to the longitudinal direction of the holding insulator (15, 45), and wherein the carrying legs (19, 47) raise the conductor cable (11, 51) above the holding insulator (15, 45) in the vertical direction.

10. Overhead line arrangement (1, 31) according to claim 9,
wherein a conductor cable (11, 51) in the holding elements (23, 53) of the carrying legs (19, 47) is led over the mast crossbeam (7, 37), and wherein the holding device (3, 33) is supported on the mast (5, 35) via the conductor cable (11, 51) by means of the stabilising insulator (9, 39).

11. Overhead line arrangement (1, 31) according to one of claims 9 or 10,
wherein the conductor cable (11, 51) is supported by the stabilising insulator (9, 39) between the holding elements (23, 53) of the carrying legs (19, 47).

12. Overhead line arrangement (1, 31) according to one of claims 9 to 11,
wherein a predetermined minimum distance is maintained between the holding device (3, 33) and the ground.

13. Overhead line arrangement (1, 31) according to one of claims 9 to 12,
wherein the carrying legs (19, 47) are aligned parallel to each another in the longitudinal direction.

14. Overhead line arrangement (1, 31) according to one of claims 10 to 13,
wherein the conductor cable (11,51) and the carrying legs (19, 47) have substantially the same minimum distance from the free end (13, 43) of the holding insulator (15, 45).

15. Overhead line arrangement (1, 31) according to one of claims 9 to 14,
wherein the supporting frame (17, 41) is formed substantially in a U-shape.

16. Overhead line arrangement (1,31) according to one of claims 9 to 15,
wherein a transverse bar (21, 49) is formed between the carrying legs (19, 47), the holding insulator (15, 45) being fixed to said transverse bar (21, 49), and wherein the carrying legs (19, 47) are formed to be mirror-symmetrical with respect to the holding insulator (15, 45).

17. Overhead line arrangement (1, 31) according to one of claims 9 to 16,
wherein the distance between the free end (13, 43) of the holding insulator (15, 45) and the supporting frame (17, 41) is adequately sized to prevent a voltage flashover in air.

18. Overhead line arrangement (1, 31) according to one of claims 9 to 17,
wherein the holding insulator (15, 45) and/or the stabilising insulator (9, 39) are formed to insulate a potential difference of at least 30 kV.

## Revendications

1. Dispositif de retenue (3, 33) pour une ligne aérienne, comprenant un cadre de support (17, 41) avec au moins deux branches de support (19, 47), à l'extrémité de chacune desquelles est disposé un élément de retenue (23, 53) destiné à recevoir un câble conducteur (11, 51), et un isolateur de retenue (15, 45) s'étendant dans une direction longitudinale, lequel est monté entre les branches de support (19, 47) du cadre de support (17, 41) et présente une extrémité libre (13, 43) pour la fixation à une traverse de mât (7, 37), **caractérisé en ce que**
le cadre de support (17, 41} est dimensionné de telle manière que les branches de support (19, 47) s'étendant au-delà de l'extrémité libre de l'isolateur de retenue (15, 45) dans la direction longitudinale de l'isolateur de retenue (15, 45), pour suspendre le câble conducteur (11, 51) au-dessus de l'isolateur de retenue (15, 45) dans la direction verticale.

2. Dispositif de retenue (3, 33) selon la revendication 1,
dans lequel les branches de support (19, 47) sont parallèles l'une à l'autre dans la direction longitudinale.

3. Dispositif de retenue (3, 33) selon la revendication 1 ou 2,
dans lequel le cadre de support (17, 41) est sensiblement en forme de U.

4. Dispositif de retenue (3, 33) selon l'une des revendications précédentes,
dans lequel une traverse (21, 49) est présentée entre les branches de support (19, 47), à laquelle est fixé l'isolateur de retenue (15, 45), et dans lequel les branches de support (19, 47) sont symétriques par rapport à l'isolateur de retenue (15, 45).

5. Dispositif de retenue (3, 33) selon l'une des revendications précédentes,
dans lequel le cadre de support (17, 41) est fabriqué en métal.

6. Dispositif de retenue (3, 33) selon l'une des revendications précédentes,
dans lequel l'espacement entre l'extrémité libre (13, 43) de l'isolateur de retenue (15, 45) et le cadre de support (17, 41) est prévu avec une grandeur suffisante pour empêcher une décharge électrique dans l'air.

7. Dispositif de retenue (3, 33) selon l'une des revendications précédentes,
dans lequel l'isolateur de retenue (15, 45) est prévu pour isoler une différence de potentiel d'au moins 30 kV.

8. Dispositif de retenue (3, 33) selon l'une des revendications précédentes,
dans lequel l'isolateur de retenue (15, 45) est réalisé comme une chaîne d'isolateurs comprenant une pluralité d'isolateurs individuels montés l'un derrière l'autre.

9. Système de ligne aérienne (1, 31), comprenant un dispositif de retenue (3, 33) selon la revendication 1, un mât (5, 35) sur lequel est fixé une traverse de mât (7, 37), dans lequel l'isolateur de retenue (15, 45) est raccordé à la traverse de mât (7, 37) par son extrémité libre (13, 43), et un isolateur de stabilisation (9, 39) qui retient le dispositif de retenue (3, 33) contre le mât (5, 35) sensiblement perpendiculairement à la direction longitudinale de l'isolateur de retenue (15, 45), et dans lequel les branches de support (19, 47) soutiennent le câble conducteur (11, 51) au-dessus de l'isolateur de retenue (15, 45) dans la direction verticale.

10. Système de ligne aérienne (1, 31) selon la revendication 9,
dans lequel un câble conducteur (11, 51) est guidé dans les éléments de retenue (23, 53) des branches de support (19, 47) au-dessus de la traverse de mât (7, 37), et dans lequel le dispositif de retenue (3, 33) s'appuie contre le mât (5, 35) par le câble conducteur (11, 51) au moyen de l'isolateur de stabilisation (9, 39).

11. Système de ligne aérienne (1, 31) selon la revendication 9 ou 10,
dans lequel le câble conducteur (11, 51) est soutenu par l'isolateur de stabilisation (9, 39) entre les éléments de retenue (23, 53) des branches de support (19, 47).

12. Système de ligne aérienne (1, 31) selon l'une des revendications 9 à 11,
dans lequel un espacement minimal défini est respecté entre le dispositif de retenue (3, 33) et le sol.

13. Système de ligne aérienne (1, 31) selon l'une des revendications 9 à 12,
dans lequel les branches de support (19, 47) sont parallèles l'une à l'autre dans la direction longitudinale.

14. Système de ligne aérienne (1, 31) selon l'une des revendications 10 à 13,
dans lequel le câble conducteur (11, 51) et les branches de support (19, 47) ont un espacement minimal sensiblement identique par rapport à l'extrémité libre (13, 43) de l'isolateur de retenue (15, 45).

15. Système de ligne aérienne (1, 31) selon l'une des revendications 9 à 14,
dans lequel le cadre de support (17, 41) est sensiblement en forme de U.

16. Système de ligne aérienne (1, 31) selon l'une des revendications 9 à 15,
dans lequel une traverse (21, 49) est présentée entre les branches de support (19, 47), à laquelle est fixé l'isolateur de retenue (15, 45), et dans lequel les branches de support (19, 47) sont symétriques par rapport à l'isolateur de retenue (15, 45).

17. Système de ligne aérienne (1, 31) selon l'une des revendications 9 à 16,
dans lequel l'espacement entre l'extrémité libre (13, 43) de l'isolateur de retenue (15, 45) et le cadre de support (17, 41) est prévu avec une grandeur suffisante pour empêcher une décharge électrique dans l'air.

18. Système de ligne aérienne (1, 31) selon l'une des revendications 9 à 17,
dans lequel l'isolateur de retenue (15, 45) et/ou l'isolateur de stabilisation (9, 39) sont prévus pour isoler une différence de potentiel d'au moins 30 kV.
